# EUROPEAN PATENT SPECIFICATION

(11) **EP 1 135 241 B1**
(45) Date of publication and mention of the grant of the patent: **08.12.2004**
(21) Application number: 99954288.9
(22) Date of filing: 11.11.1999
(51) Int. Cl.: B29C 45/00, B29C 33/00, B65D 47/20, B65B 31/04

(54) **A CARTRIDGE FOR CONTAMINATION-FREE DISPENSING AND DELIVERY SYSTEMS**
KARTUSCHE FÜR VERUNREINIGUNGSFREIE ABGABE- UND VERABREICHUNGSSYSTEME
CARTOUCHE POUR SYSTEMES DE DISTRIBUTION ET D'ADMINISTRATION SANS CONTAMINATION

(30) Priority: 16.11.1998 US 193264
(43) Date of publication of application: 26.09.2001
(73) Proprietor: Waterfall Company, Inc., Santa Cruz, CA 95060 (US)
(72) Inventor: GERBER, Bernard, R., Santa Cruz, CA 95062-2707 (US)
(74) Representative: Casey, Lindsay Joseph
(86) International application number: PCT/IB1999/001847
(87) International publication number: WO 2000/029192

(56) References cited:
- WO-A-98/14387
- CH-A- 249 681
- DE-A- 3 232 287
- GB-A- 2 126 518
- US-A- 5 348 616
- PATENT ABSTRACTS OF JAPAN vol. 11, no. 120 (M-580), 15 April 1987 (1987-04-15) & JP 61 261015 A (HITACHI LTD), 19 November 1986 (1986-11-19)
- PATENT ABSTRACTS OF JAPAN vol. 14, no. 327 (M-998), 13 July 1990 (1990-07-13) & JP 02 111516 A (TOSHIBA CORP), 24 April 1990 (1990-04-24)
- PATENT ABSTRACTS OF JAPAN vol. 15, no. 260 (M-1131), 2 July 1991 (1991-07-02) & JP 03 087213 A (KURARAY CO LTD), 12 April 1991 (1991-04-12)

## Description

### BACKGROUND OF THE INVENTION

### 1. Field of Invention

The field of the invention relates generally to devices for controlling the flow of flowable materials such as liquids, solutions, dispersions, suspensions, gels, pastes and other fluids. More particularly, the field of the invention relates to a dispensing system for delivering multiple doses of flowable materials and for preventing the influx of external contaminants during and between deliveries, thereby maintaining the sterility and integrity of the flowable material and extending the useful life of the material to be substantially equivalent to its shelf life.

### 2. Description of the Related Art

The dispensing of flowable materials in a contamination-free manner, especially over prolonged periods of time or in a repetitive manner such as delivery of multiple doses, presents many difficulties. The main problems relate to precise flow control and prevention of back flow or reflux. In fact, external contaminants easily can enter a container with the back flow at the end of the delivery cycle.

Most collapsible or volumetrically reducible containers for flowable materials have a discharge port such as a hole, nozzle, spout or other type of opening. The contents, such as pastes, liquids or other fluids exit through the discharge port propelled by internal pressure. This method of dispensing the flowable material is frequently inaccurate and does not prevent the entry of external contaminants into the container. Hence, additional pouring or dispensing devices are surmounted on the discharge port when precise control of the dispensing characteristics is desired. These devices must be simple, effective and low-cost, especially if intended for widespread commercial and domestic use.

Typically, a dispensing apparatus has a valve mechanism to ensure precise delivery. In U.S. Patent No. 5,033,655, Brown teaches how to dispense fluid products from a non-collapsible container by employing a system with a slit valve. The system admits air to prevent the collapse of the container as fluid is delivered to the user. Thus, external contaminants borne by air are forced into the solution remaining in the container. Clearly, such a dispensing apparatus is not suitable for contamination-free dispensing from collapsible containers.

A simple solution in the form of a squeeze valve with augmented sealing is presented by Vorhis in U.S. Patent No. 5,265,847. This apparatus is adapted for containers whose contents are expelled under the force of gravity. In U.S. Patent No. 5,099,885, Nilsson discloses a flapper valve, which delivers viscous fluids by means of a pump. This solution is not applicable to all types of liquids and fluids. Likewise, in U.S. Patent No. 5,346,108, Pasinski discloses a gauged dispensing apparatus to deliver a predetermined amount of generally viscous fluid. The apparatus has a flexure with a bi-stable orientation, concave to convex. Airborne contaminants can enter the apparatus as the flexure returns to its original position.

In addition to the shortcomings already discussed, the above conventional solutions to the problem of preventing airborne contaminants from entering a flowable medium are not specifically designed to prevent back flow. Haviv teaches in his U.S. Patent No. 5,080,138 a valve assembly relying on a sleeve valve and comprising of multiple components. Back flow is thwarted by a sheath which permits the flowable material to flow out of the valve but prevents any back flow into the container. Unfortunately, this device is complicated, costly to manufacture and difficult to assemble.

A simple discharge nozzle is presented by Latham in U.S. Patent No. 5,398,853. The nozzle is adapted for the delivery of pastes such as toothpaste. Although Latham does attempt to eliminate the transfer of germs between the discharge opening and the secondary surface where the paste is applied, his nozzle will not arrest the influx of bacteria. For example, bacteria can enter when the nozzle is immersed in a solution.

More effective methods of contamination-free dispensing are disclosed in U.S. Patent Nos. 5,305,786 and 5,092,855 issued to Debush and Pardes. respectively. Debush discloses a modification to the applicant's prior U.S. Reissue No. 34,243 relying on an expandable elastomeric sleeve tightly fitted about a valve body with entry and exit ports. Debush's improvement is aimed at simplifying the assembly. Unfortunately, his solution requires more material to manufacture the valve. In addition, it is difficult to produce a discoid-shaped valve for this invention and adapt the apparatus to collapsible containers. Pardes discloses a rigid enclosing sleeve to retain the elastomeric sheath against the valve body, thus providing a seal between the sheath and the valve body. This is closely related to the applicant's teaching in U.S. Reissue No. 34,243. Pardes' valve operates through two sets of ports within a valve body, thus rendering the device unnecessarily complex.

None of the these conventional dispensing devices is low-cost, simple in construction and capable of delivering a flowable material ranging from low to high viscosity. Furthermore, these conventional devices can not be easily adapted to collapsible containers which do not produce an internal vacuum when their contents are expelled. Such conventional dispensing devices also cannot maintain a sterile condition, once the apparatus is used or opened to the atmosphere. Nor do such conventional methods provide proof of the ability to maintain sterility or integrity of a flowable material during multiple uses.

Thus, it is desirable to provide a contamination-free multiple dose dispensing cartridge for dispensing a flowable material from a collapsible container. Further, it is desirable to provide a dispensing cartridge which prevents the back flow or reflux of the flowable material, thereby preventing external contaminants from entering the container through the dispensing cartridge during and after delivery of the flowable material. It is also desirable to provide a dispensing system having a contamination-free cartridge that is simple in construction and easy to mount on various types of collapsible containers. It also would be desirable to provide experimental validation of a system's effectiveness for maintaining the sterility and integrity of a flowable material.

According to an aspect of the present invention, there is provided a packaging system as specified in claim 1.

There is disclosed a multiple-dose dispensing cartridge for dispensing a flowable material from a collapsible container, i.e., a container which does not produce an internal vacuum as the flowable material is dispensed. The multiple-dose dispensing cartridge prevents external contaminants from entering the container during and between deliveries. In particular, the cartridge has a housing and an attaching mechanism for attaching the housing to a delivery port of the container in an airtight manner. A delivery block located inside the housing has an input port for receiving the flowable material exiting the container through the delivery port. An internal channel commencing at the input port and terminating in at least one output port runs through the delivery block. An elastomeric sheath envelops the delivery block such that a portion of the sheath covers the output port or ports to form one or more sleeve valves which permit only the outflow of the flowable material from the output port or ports.

In a preferred embodiment, the cartridge has an outlet valve formed by an end of the elastomeric sheath downstream of the one or more sleeve valves. The outlet valve also permits only the outflow of the flowable material. Typically, the outlet valve formed by the end of the sheath is a duck bill valve, a slit valve or a flapper valve. In another embodiment the outlet is formed by the end of the elastomeric sheath without creating a valve.

The cartridge further comprises a dispensing port defined by the housing for dispensing the flowable material exiting from the outlet valve or outlet created by the elastomeric sheath.

The cartridge can be mounted on collapsible containers such as tubes, bags, infusion containers, syringes, pouches, collapsible reservoirs, bellows-type containers and the like. The attachment mechanism will depend on the type of container and may generally be constituted by an adhesive seal, a screw-on neck, a press-fit neck, a bonding seal, a heat seal, an ultrasonic weld, or other joining material or element.

The housing is preferably made of a moldable material and is rigid. This is necessary to arrest the expansion of the elastomeric sheath and prevent abrasion of the sheath as the flowable material is being dispensed. The elastomeric sheath is preferably made of a moldable thermoplastic elastomer. Exemplary materials which can be utilized in making the sheath include styrene-butadiene styrene, silicone, urethane, kraton, rubber and the like. Furthermore, the sheath is affixed on the delivery block to prevent slip-off and ensure proper operation of the sleeve valve or valves. This can be accomplished with an O-ring and a corresponding groove formed in the delivery block or a protrusion in the sheath for fitting into an analogous groove in the delivery block. Alternatively, the sheath is pinched between the delivery block and the housing. In all cases, however, the inner diameter of the sheath in undistended state is smaller than the outer diameter of the delivery block such that the sheath will fit tightly around the delivery block. The preferred range of inner diameters of the sheath is 0.5 to 0.8 times the outer diameter of the delivery block.

Alternatively, the housing may be eliminated by modifying the fluid container and thereby reducing the cartridge to only two components: the delivery block and the elastomeric sheath. When provides, the housing serves to protect the elastomeric sheath from contract abrasion, to prevent rupture of the elastomeric sheath by preventing excessive expansion of the elastomeric sheath, and to compress the elastomeric sheath onto the delivery block to form a fluid-tight seal between the elastomeric sheath and the delivery block to prevent leakage or backflow of the flowable material from its path. Each of these functions of the housing can be achieved by modifying the inner surface of the neck of the container adjacent to the delivery port of the container. The inner surface of the reservoir neck, in the case of bottles and tubes, or inner surface of the fitment or fixture joined to the delivery port, in the case of a bag, pouch, syringe or piston, can be modified to provide the functions and features of the housing. Alternatively, separate adapters can be made for insertion into the delivery port of the container, allowing the attachment of the two-component cartridge thereto. By use of the adapter, one or only a few sizes of cartridges could fit most containers.

The cartridge is effective in preventing the entry of air and its constituents, oxygen, nitrogen, water vapor and other atmospheric gases as well as other air-borne contaminants including smoke, dust, pollen and microorganisms. Thus, the contents of the collapsible or volumetrically reducible container are protected from degradation due to these types of external contaminants. In a particularly advantageous embodiment, the dispensing cartridge can be permanently bonded to the container by the manufacturer, for example, thermally, ultrasonically with adhesives or lasers, such that the container and cartridge constitute an integrated dispensing system.

In addition, the present invention provides experimental validation of its ability to maintain the sterility and integrity of flowable product even when challenged by static and dynamic immersion in concentrated solutions of bacteria or virus.

The system advantageously utilizes an optimal geometry of the delivering block as used at the elastomer sheath which provides a constant stress along the length of the delivery blank to thereby provide a seal effective against the backflow of any external contaminants, including air or microbes.

The invention also includes a novel process according to claim 4 for eliminating all discontinuities as nonconformities in component parts which otherwise could provide paths for the entry of microorganisms.

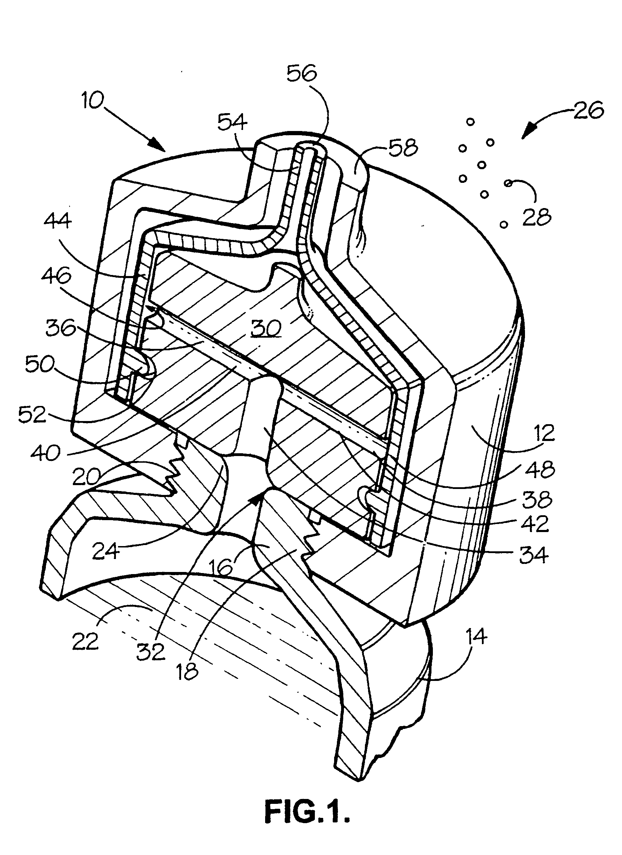

The invention will be understood in greater detail from the following description of preferred embodiments thereof given by way of example only and with reference to the accompanying drawings in which :-
**FIG**. **1** is a cross-sectional perspective view of a dispensing cartridge;
**FIG**. **2** is a cross-sectional view of the dispensing cartridge of **FIG. 1** before delivery.
**FIG**. **3** is a cross-sectional view of the dispensing cartridge of **FIG. 1** during delivery.
**FIG**. **4** is a perspective view of the tip portion of the cartridge of **FIG. 1.**
**FIG**. **5** is a perspective view of a portion of the outlet valve.
**FIG**. **6** is a perspective view of a delivery block for the cartridge;
**FIG**. **7** is a cross-sectional view of a dispensing cartridge mounted on a tube.
**FIG**. **8** is a cross-sectional view of a dispensing cartridge mounted on a syringe.
**FIG**. **9** is a cross-sectional view of a dispensing cartridge without an outlet valve.
**FIG**. **10** is a cross-sectional view of another dispensing cartridge without an outlet valve.
**FIG**. **11** is a cross-sectional view of yet another dispensing cartridge mounted on a bellows-type container.

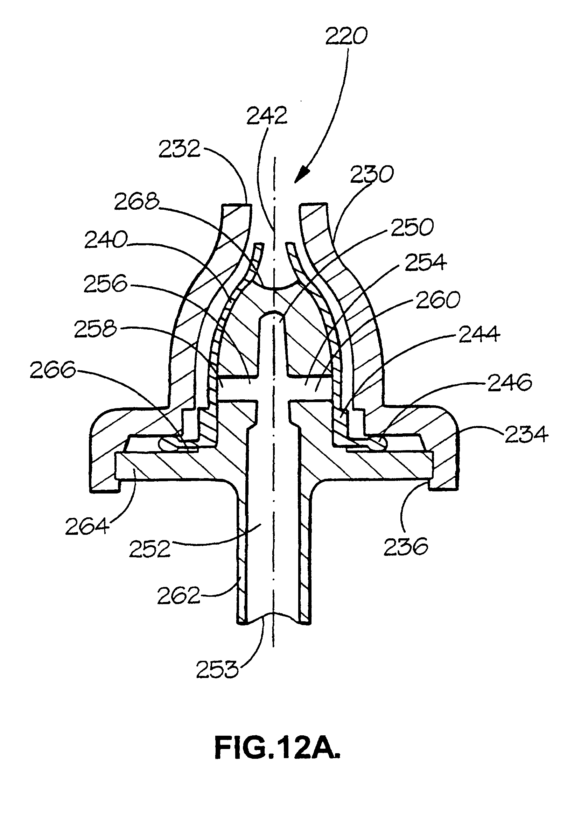

**FIG. 12A** is a cross-sectional view of another dispensing cartridge without an outlet valve.

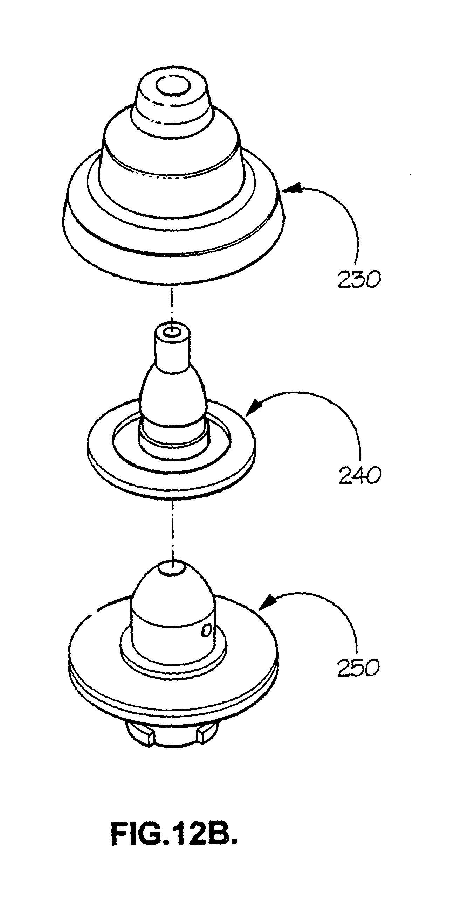

**FIG. 12B** is an exploded perspective view of the dispensing cartridge of **FIG**. **12A**.
**FIG**. **13** is a cross-sectional view of another dispensing cartridge.
**FIG**. **14** is a cross-sectional view of another dispensing cartridge.
**FIG**. **15A** is a perspective view of the delivery block of the dispensing cartridge of **FIG**. **12A**.
**FIG**. **15B** is a perspective view of the elastomeric sheath of the dispensing cartridge of **FIG**. **12A**.
**FIG**. **15C** is a perspective bottom view of the elastomeric sheath of the dispensing cartridge of **FIG**. **12A**.
**FIG**. **15D** is a perspective view of the housing of the dispensing cartridge of **FIG**. **12A**.
**FIG**. **16A** is a top view of the delivery block of the dispensing cartridge of **FIG**. **12A**.
**FIG**. **16B** is a top view of the elastomeric sheath of the dispensing cartridge of **FIG**. **12A**.
**FIG**. **16C** is a bottom view of the housing of the dispensing cartridge of **FIG**. **12A**.
**FIG**. **17A** shows a modified atmosphere packaging system for removing the original atmosphere of the container.

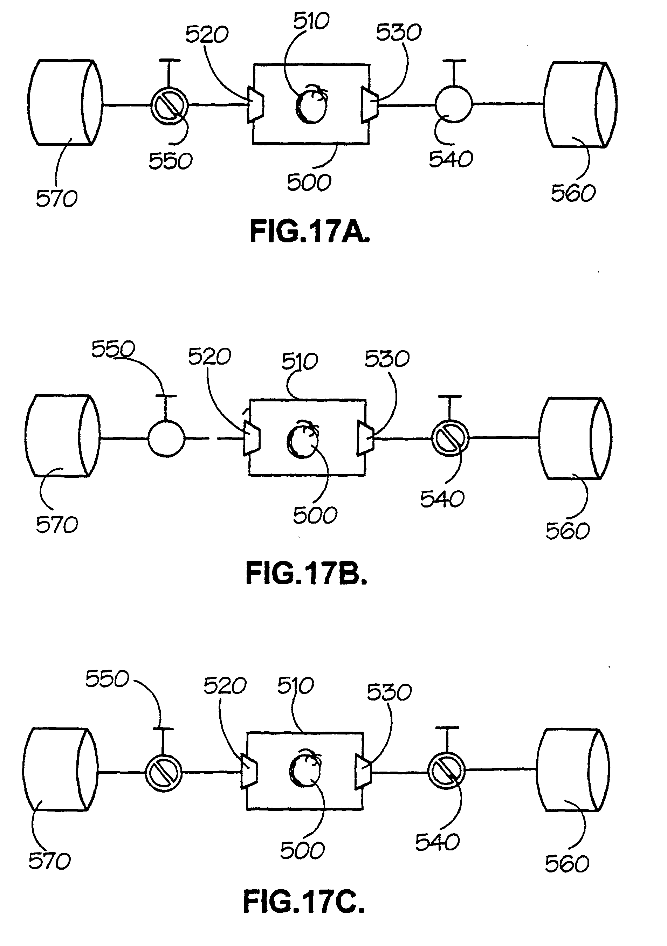

**FIG. 17B** shows a modified atmosphere packaging system for filling a container with a controlled atmosphere.
**FIG. 17C** shows a modified atmosphere packaging system in which a filled container contains a controlled atmosphere.

### DETAILED DESCRIPTION

A preferred embodiment of a dispensing cartridge **10** is shown in **FIG**. **1**. The dispensing cartridge **10** comprises a housing **12** made of a moldable material which is rigid and inert. The dispensing cartridge **10** is shown to be mounted on a collapsible container **14** of which only the top portion is shown. Although the cartridge **10** is shown to be much larger than a neck **16** of the container **14,** it may be desirable to reduce the dimensions of cartridge **10** considerably, such that the container **14** constitutes a small extension of neck **16** or protrudes into or be embedded in neck **16.** In the embodiment shown, neck **16** has a neck threading **18** which cooperates with cartridge threading **20** on a lower portion of housing **12.** Thus, cartridge **10** is mounted on container **14** in an air-tight manner by screwing housing **12** onto neck **16.**

A flowable material **22** is stored in container **14.** Typically, material **22** is a liquid or fluid which requires careful dispensing and protection from external contaminants **26.** These contaminants **26** can be broken down into particulates or other matter **28** such as air and its constituents such as oxygen, nitrogen, water vapor and other atmospheric gases, as well as airborne contaminants including smoke, dust, pollen and microorganisms. Airborne microorganisms may include yeasts, molds, bacteria, protozoa and diverse viruses. Many flowable products, such as medicines, chemicals, health-care materials, personal hygiene materials, edibles and other flowable goods, require protection from at least one of the above-listed contaminants **26.** These products are encountered in domestic, commercial and industrial settings.

Neck **16** terminates in an opening or delivery port **24.** Flowable material **22** exits container **14** through port **24** to enter dispensing cartridge **10.** Cartridge **10** includes a delivery block **30** whose lower portion defines an input port **32** for receiving material **22.** Delivery port **24** is pressed firmly and tightly against the bottom of delivery block **30** when cartridge **10** is mounted on container **14** to allow flowable material **22** to be directly introduced from the delivery port **24** into input port **32.**

Delivery block **30** has an internal channel **34** which commences at input port **32** and splits into two branches **40** and **42,** each branch terminating in an output port **36** and **38**, respectively. In this embodiment output ports **36** and **38** are arranged on diametrically opposite faces of delivery block **30.** This geometrical placement of ports **36** and **38** is preferred because it is easily manufactured and ensures their largest circumferential separation between the ports **36** and **38.**

Elastomeric sheath **44** stretches over or envelops delivery block **30.** Preferably, the material of elastomeric sheath **44** is a moldable thermoplastic elastomer. Although a person with average skill in the art will be able to find other suitable elastics, the most preferred ones include styrene-butadiene styrene, silicone, urethane, kraton and rubber.

To ensure that sheath **44** fits tightly around delivery block **30,** it is important that in the undistended state the inner diameter of sheath **44** be smaller than the outer diameters of block **30.** This ensure that when sheath **44** is placed over delivery block **30,** it will stretch to tightly envelop delivery block **30.** Preferably, the inner diameter of sheath **44** in the undistended state is berween approximately 0.5 to 0.8 times the outer diameter of delivery block **30.** The taut fit around block **30** achieved by the diameter differential ensures good operation of sleeve valves **46** and **48** described below.

Another provision for securing sheath **44** in place over delivery block **30** includes an inward bulge or protrusion **50** extending circumferentially around delivery block **30.** Correspondingly, delivery block **30** has a groove **52** for receiving protrusion **50.** Sheath **44** is securely fixed when protrusion **50** is lodged or seated in groove **52** along the circumference of delivery block **30**. In essence, protrusion **50** serves to attach or affix sheath **44** to delivery block **30** at a location below output ports **36** and **38**. Alternatively, sheath **44** can be attached to delivery block **30** by ultrasonic welding or a thermal heat seal.

When properly mounted, sheath **44** extends over the sides of delivery block **30** to cover both output ports **36** and **38** to form two sleeve valves **46** and **48** at the interface between the sheath **44** and ports **36** and **38**, respectively. The sleeve valves **46** and **48** are one-way valves and operate when forced open by pressure at ports **36** and **38**.

Downstream of sleeve valves **46** and **48** and generally above delivery block **30,** sheath **44** constricts and terminates at an end **54.** At end **54**, the elastic material of sheath **44** preferably narrows down to a thin neck, which is normally closed as the elastic material adheres to itself. As shown in **FIG. 1**, end **54** of sheath **44** forms an outlet valve **56**. The outlet valve **56** may be, for example, a duck bill valve, a slit valve or a flapper valve. A person with average skill in the art will appreciate that the exact geometry and parameters of outlet valve **56** can vary depending on the way the material of sheath **44** comes together. Outlet valve **56** is a one-way, normally closed valve to permit only the outflow of flowable material **22** when pressure causes the adhering walls at end **54** to open outlet valve **56**.

Housing **12** has a dispensing port **58** in the form of a circular opening at the point of exit of outlet valve **56**. Depending on the application, dispensing port may surround outlet valve **56** and protect end **54** of sheath **44** from contact with external objects. Alternatively, end **54** may protrude beyond the walls of dispensing port **58,** particularly if periodic cleaning of outlet valve **56** is desired.

The general shape of housing **12** preferably conforms to the shape of sheath **44** when delivering flowable material **22.** Thus, the housing **12,** in addition to general protection of the elements of cartridge **10** from the external environmental hazards, also serves to arrest the expansion of sheath **44.** Such function of the housing **12** prevents sheath **44** from rupturing and ensures proper flow delivery characteristics of flowable material **22.**

The inner diameter of housing **12** is preferably selected to be greater than the outer diameter of delivery block **30** by an amount depending on the desired rate of delivery of flowable material **22** from outlet valve **56,** the viscosity of flowable material **22** and the elasticity and rupture point of sheath **44.** Adequate doses of flowable material **22** are possible with expansion in the diameter of sheath **44** of as little as 500 µm. The inner diameter of housing **12** relative to the outer diameter of delivery block **30** may be chosen depending upon the specific application. The internal surfaces of the housing **12** are preferably smooth to protect sheath **44** from abrasion when flowable material **22** is being delivered.

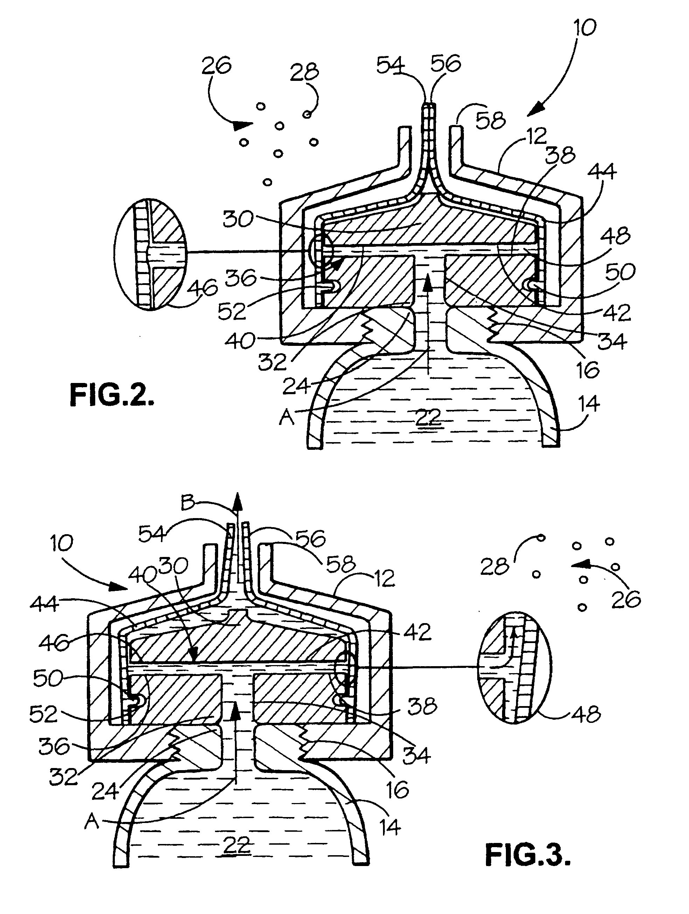

The operation of dispensing cartridge **10** is best explained with reference to **FIGS. 2** and **3.** In **FIG. 2,** the cartridge **10** is disabled although flowable material **22** is present in internal channel **34** and branches **40** and **42.** As indicated by arrow A, flowable material **22** has passed through neck **16** and delivery port **24** into internal channel **34** through input port **32.** Sleeve valves **46** and **48** at ports **36** and **38** are closed as sheath **44** tightly envelops delivery block **30.** The magnified view of sleeve valve **46** illustrates flowable material **22** wetting sheath **44.** Due to insufficient pressure, flowable material **22** is unable to open sleeve valve **46** or **48.** Meanwhile, outlet valve **56** remains closed and there is no flowable material **22** downstream of outlet valve **56.**

To activate cartridge **10,** as shown in **FIG. 3,** pressure is exerted either on container **14** or on flowable material **22.** Pressure may be exerted on the container **14** by compressing container **14** by manual or mechanical methods such as with a peristaltic pump. Pressure may be exerted on the tlowable material **22** by pumping or other internal method of pressure delivery. Both sleeve valves **46** and **48** are forced open by the pressure exerted by the flowable material **22.** Sheath **44** expands as flowable material **22** fills the space downstream of sleeve valves **46** and **48**. Simultaneously, housing **12** prevents excessive expansion of sheath **44** and its rupture or abrasion.

As the flowable material travels toward end **54** of the sheath **44,** the pressure of flowable material **22** trapped under sheath **44** operates to opens outlet valve **56.** Thus, flowable material **22** is dispensed through outlet valve **56** as indicated by arrow **B**. When the pressure of the flowable material **22** drops below a minimum threshold pressure necessary to keep sleeve valves **46** and **48** open. the flowable material **22** remaining between the housing **12** and the sheath **44** will be expelled through outlet valve **56.** This occurs due to the pressure exerted by sheath **44** as it contracts back to snugly envelop delivery block **30.**

The arrangement of sleeve valves **46** and **48** with outlet valve **56** in tandem is clearly advantageous. There is no back flow of flowable material **22** through either sleeve valve **46** or **48.** All flowable material **22** remaining under sheath **44** is expelled through outlet valve **56.** Thus. there is no back flow through outlet valve **56** either. As a result, the operation of dispensing cartridge **10** is contamination-free. No particles **28** of external contaminants **26** can enter through outlet valve **56** and sleeve valves **46** or **48** to end up inside container **22.**

The operation of dispensing cartridge **10** is the same during subsequent cycles. since all flowable material **22** trapped downstream of sleeve valves **46** and **48** will always be expelled through outlet valve **56.** Dispensing cartridge **10** is thus suitable for delivering multiple-doses.

Depending on the application, dispensing cartridge **10** can be mounted on container **14** by the manufacturer or consumer. For example, when flowable material **22** is a paste, medicinal fluid or edible substance intended for the general consumer market, cartridge **10** can be conveniently factory-installed. Alternatively, the end user may decide when cartridge **10** is to be utilized to dispense a particular liquid or fluid.

The construction of dispensing cartridge **10** ensures its operation with materials spanning a wide range of viscosities. Consequently, dispensing cartridge **10** is highly effective and universal. Its contamination-free operation renders it useful in preserving the purity of virtually any flowable material which is delivered from a container that does not produce an internal vacuum when its contents are expelled.

The construction and materials required to produce dispensing cartridge **10** are low-cost and straightforward to assemble and the finished product can be easily mounted on or in any collapsible or reducible container. To mount the dispensing cartridge **10** in a container, the dispensing cartridge **10** can be modified for air-tight seating inside neck **16.** The modifications required are straightforward and easily implemented by a person of average skill in the art.

In the permanently mounted state, dispensing cartridge **10** and container **14** form a highly effective integrated dispensing system. Such system is of great value in dispensing flowable materials intended for domestic or commercial consumption. That is because the consumer call be offered a ready-to-use product for delivering multiple-doses in a contamination-free manner.

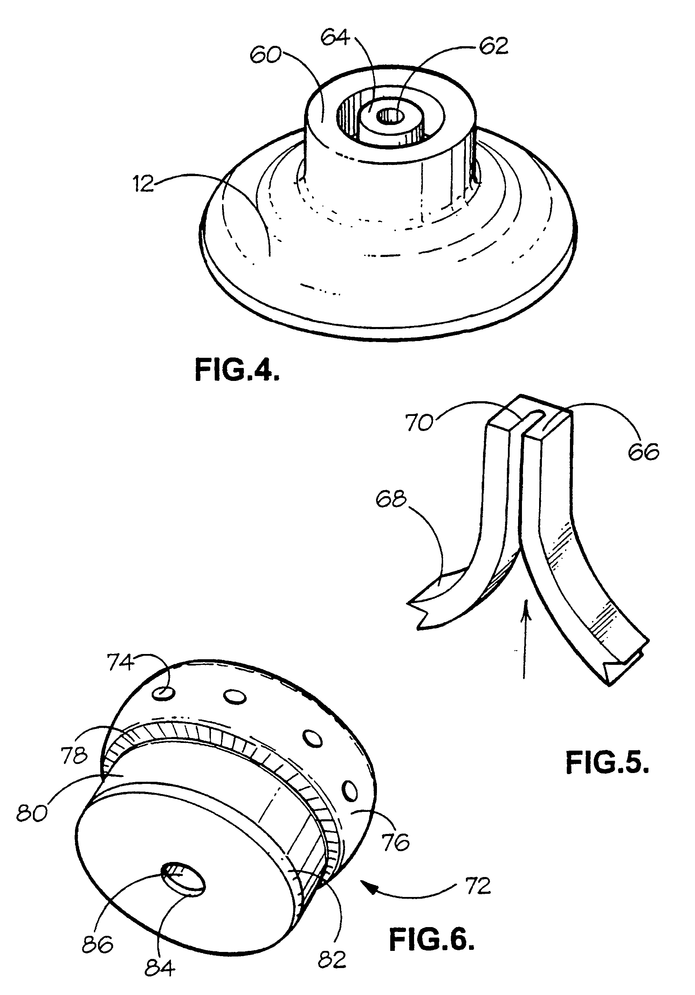

The preferred embodiment of **FIGS. 1-3** can be modified in several ways to render it more suitable for specific applications. For example, **FIG. 4** shows the tip portion of housing **12** with an elevated or raised dispensing port **60.** In this case, an outlet valve **62** formed by an end **64** of sheath **44** is completely protected by the high wall of dispensing port **60.** This embodiment is more suitable for applications where outlet valve **62** should remain inaccessible from the exterior.

**FIG. 5** affords a more detailed view of an end **66** of a sheath **68** forming an outlet valve **70.** In this embodiment, sheath **68** narrows down to a rectangular opening constituting a slit valve. Of course, different shapes of the opening created by end **66** will produce different valves with differing flow characteristics. Other valves, such as duck bill valves and flapper valves, can be formed by the end **66** of sheath **68.** One of average skill in the an can utilize other types of valves as well as determine which particular valve type is best suited for the flowable material to be delivered and the dispensing conditions.

**FIG. 6** illustrates a delivery, block **72** with numerous output ports **74.** In this case, output ports **74** are located circumferentially at equal spacings along a top portion **76** of delivery block **72.** Below the top portion **76** is located a groove **78** for attaching an elastomeric sheath **44.** Delivery block **72** has a lower portion **80** and a bottom protective layer **82** for improved contact with neck **16** of container **14.** An input port **84** at an end of an internal channel **86** is shown at the bottom of delivery block **72.** Delivery block **72** is particularly well-suited for higher throughput of flowable materials.

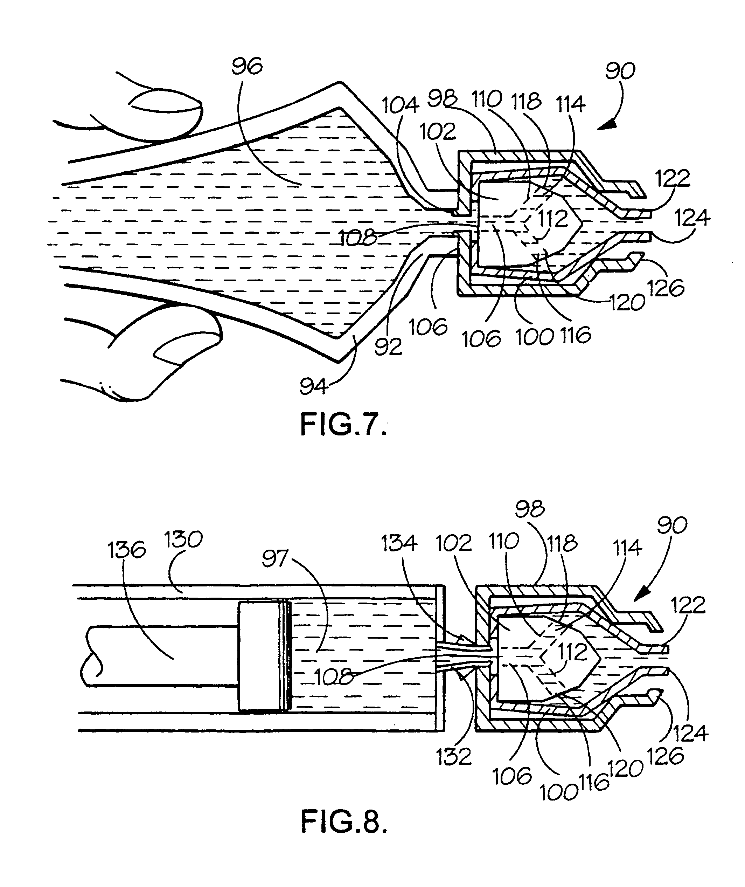

**FIG. 7** shows a dispensing cartridge **90** mounted on a neck **92** of a tube **94.** This arrangement is designed to dispense a paste **96,** e.g., toothpaste. It should be noted that the actual size of dispensing cartridge **90** for mounting on a toothpaste tube would be preferably much smaller.

The dispensing cartridge **90** has a housing **98** inside which an elastomeric sheath **100** envelops a delivery block 1**02**. In this embodiment, sheath **100** is fixed by pinching it in an air-tight manner between housing **98** and delivery block **102.** The bottom of housing **98** has a press-fit neck **104** which fits inside neck **92** of tube **94.** An additional adhesive seal **106,** e.g., an adhesive agent, can be provided around press-fit neck **104.**

Delivery block **102** has an internal channel **106** which commences at an input port **108** and splits into two branches **110** and **112**. The two branches **110** and **112** terminate in output ports **114** and **116** to form two sleeve valves **118** and **120,** respectively. An end **122** of sheath **100** forms an outlet valve **124.** Housing **98** has a dispensing port **126** which protects outlet valve **124** from the external environment.

**FIG. 7** shows dispensing cartridge **90** in the delivery mode and the operation of dispensing cartridge **90** is analogous to that of the preferred embodiment described above. In the delivery mode, sleeve valves **118, 120** and outlet valve **124** are open and paste **96** is dispensed from dispensing port **126.** The pressure supplied by the user squeezing tube **94** as shown forces open sleeve valves **118** and **120** and ejects paste **96** from tube **94** through outlet vaive **124.**

The additional advantage of the embodiment shown in **FIG. 7** resides in its simplicity. The pinching of sheath **100** to keep it in place around delivery block **106** is a low-cost solution. Furthermore, the press-fit established between neck **92** and press-fit neck **104** renders this embodiment suitable for pre-mounting of delivery cartridge **90** by the manufacturer.

**FIG**. **8** shows cartridge **90** of **FIG**. **7** mounted on a syringe **130**. The only difference between the previous embodiment is that cartridge **90** is attached to a neck **132** of syringe **130** by a bonding seal **134**. The bonding seal **134** is preferably applied from a dispensing unit (not shown) once cartridge **90** is placed into place on neck **132**. The bonding seal **134** can be any adhesive agent or an epoxide. Alternatively or additionally, an ultrasonic weld joint or a heat seal may be utilized where the bonding material is melted around neck **132**. A superior connection is achieved where neck **132** is itself made of a plastic or other material which can partially melt together with the bonding material.

During operation, the pressure provided by a plunger **136** causes a flowable material **97** to be dispensed by cartridge **90** as described above. This embodiment is well-suited for delivering medicinal fluids in household and hospital settings.

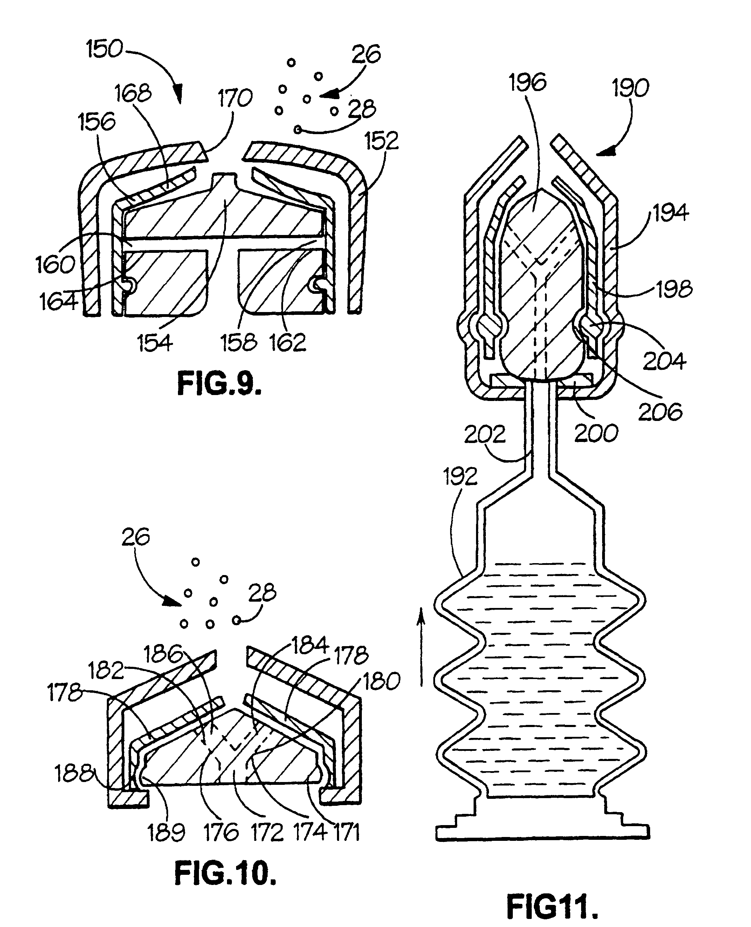

**FIG. 9** illustrates yet another embodiment. **FIG. 9** shows a housing **152** of dispensing cartridge **150** housing a delivery block **154** enveloped by an elastomeric sheath **156.** As in the preferred embodiment, two sleeve valves **158** and **160** are formed at output ports **162** and **164** of delivery block **154.**

An end of sheath **156** in this embodiment produces an outlet **168.** In distinction to the preferred embodiment, however, outlet **168** does not produce a valve. During operation, sleeve valves **158** and **160** operate similar to sleeve valves as described above and outlet **168** allows the flowable material to exit through a dispensing port **170.** After dispensing the flowable material, sheath **156** constricts tightly around delivery block **154.** Constriction of the sheath **156** prevents external contaminants **28** from entering the space downstream of sleeve valves **158** and **160** between sheath **156** and delivery block **154.** The constriction also expels the remaining flowable from that space. Consequently, the operation of this embodiment is analogous to the preferred embodiment but does not require the additional outlet valve.

**FIG. 10** shows yet another embodiment of a dispensing cartridge **170** without an outlet valve. In this embodiment branches **174** and **176** of an internal channel **172** form a Y-shape in a delivery block **171**. An elastomeric sheath **178,** covers up output ports **180** and **182** to form sleeve valves **184** and **186,** respectively. Sheath **178** has a groove **188** for seating a protrusion **189** of delivery block **171.** This method of affixing sheath **178** on delivery block **171** is different from the other embodiments where the groove is found in the delivery block.

**FIG. 11** shows a dispensing cartridge **190** mounted on a bellows-type container **192.** A housing **194** protects a delivery block **196** which is enveloped. by an elastomeric sheath **198.** A seat **200** is provided for mounting delivery block **196** inside housing **194** and for providing an air-tight seal against a neck **202** of container **192.**

Sheath **198** defines an O-ring **204** and delivery block **196** defines a corresponding groove **206** for seating O-ring **204.** Attachment of sheath **198** using O-ring **204** is more secure than in the other embodiments described above. Therefore, dispensing cartridge **190** is especially well-suited for dispensing flowables under conditions which place a high stress on sheath **198.**

**FIG. 12A** shows another embodiment of a dispensing cartridge **220.** Cartridge **220** generally provides contamination-free unidirectional dispensing from a container holding a flowable medium. The cartridge **220** further protects the flowable medium in the container from airborne contamination and against oxidation or degradation due to exposure to air as well as from contamination by fluid immersion. This can also allow the flowable medium to be reformulated without preservatives, cleaning agents, or bacterial killing agents.

Cartridge **220** generally comprises a housing **230** and an elastomeric sheath **240** which envelopes a delivery block **250** inside housing **230**. Cartridge **220** may either be integrally formed with the container or provided separately. The housing **230** provides protection to the elastomeric sheath **240** from puncture or rupture by over-expansion.

The delivery block **250** has an internal channel **252** commencing at input port **253** and splits into branches **254** and **256**. Branches **254** and **256** terminate at output pons **258** and **260**, respectively. The elastomeric sheath **240** cover output ports **258** and **260** to form sleeve valves at output ports **258** and **260**. When dispensing cartridge **220** is closed, as shown in **FIG**. **12A**, the sleeve valves formed by the elastomeric sheath **240** at output ports **258** and **260** form a fluid-tight seal.

Elastomeric sheath **240** is made of a material having elastic properties. The elastic or resilient nature of the elastomeric sheath **240** enables it to squeeze the delivery block **250**, covering output ports **258** and **260** to form fluid-tight sleeve valves when the dispensing cartridge is intended to be closed.

When flowable material is being dispensed, the flowable material opens the sleeve valves formed at output ports **258** and **260,** exits through output ports **258** and **260**, moves downstream through outlet **242** and exits a port **232** of housing **230**. The sleeve valves at output ports **258** and **260** are opened by creating an internal pressure in the flowable material sufficient to overcome the elasticity or resiliency of the elastomeric sheath **240** and/or by displacing the sheath **240,** allowing flowable material to exit due to, for example, hydrostatic pressure. Once the dispensing is terminated, however, the elastomeric sheath **240** quickly returns toward or to its undeformed state, squeezing the delivery block **250** and preventing any backflow. While the sheath **240** returns toward or to its undeformed or closed state, flowable material is forced downstream of the output ports due to residual flow. Thus, the direction of flowable material is essentially one-way or unidirectional flow.

To provide even greater sealing force, elastomeric sheath **240** has a collar **244** which provides an increased resilience. The thickness of collar **244** can be optimally designed based on the amount of force required to prevent fluid from exiting output ports **258** and **260.** Specifically, a thicker collar provides greater tension and is more suitable for applications requiring a higher cracking pressure, i.e., the minimum pressure required to open the dispensing cartridge so that flowable material can exit.

As discussed above, the elastomeric sheath **240** squeezes the delivery block **250.** Hence, it is undesirable for the delivery block **250** to have any sharp protrusions which could puncture the sheath. Accordingly, the delivery block **250** has a concave tip **268** to ensure that any remnants from the injection molding process will not protrude into the elastomeric sheath **240.**

Elastomeric sheath **240** is held in place between housing **230** and the delivery block **250**. Housing **230** defines a lip **236** which cooperates with a flange **264** of delivery block **250** to attach the delivery block **250** to the housing **230.** Alternatively, other suitable attaching mechanisms may be used including, for example, ultrasonic welding, adhesives, press-fits, and heat seals to attach the delivery block **250** to the housing **230**. The sheath **240** is further supported by a ridge **266** defined by the delivery block **250** which acts as a stop for sheath **240.**

The elastomeric sheath **240** defines a smooth O-ring **246** which is press-fitted between a hood **234** of housing **230** and the flange **264** of delivery block **250.** The surface of the hood **234** contacting the O-ring **246** is preferably smooth to form a fluid-tight seal. This smoothness can be attained by highly polishing the mold in which housing **230** is formed, as will be described.

Dispensing cartridge **220** can be integrally provided with a container or can be attached thereto. Preferably, a neck **262** of delivery block **250** is tapped or threaded. Alternatively, neck **262** may be adapted to form a luer-type connection. Attaching dispensing cartridge **220** to the container may be further facilitated by a protrusion, such as a peg, defined by the delivery block **250** which fits into a hole defined by the housing **230.** A peg and hole combination, or any other suitable lock and key combination, prevents rotation of the housing **230** about the delivery block **250** when, for example, the dispensing cartridge **220** is tightened onto a container.

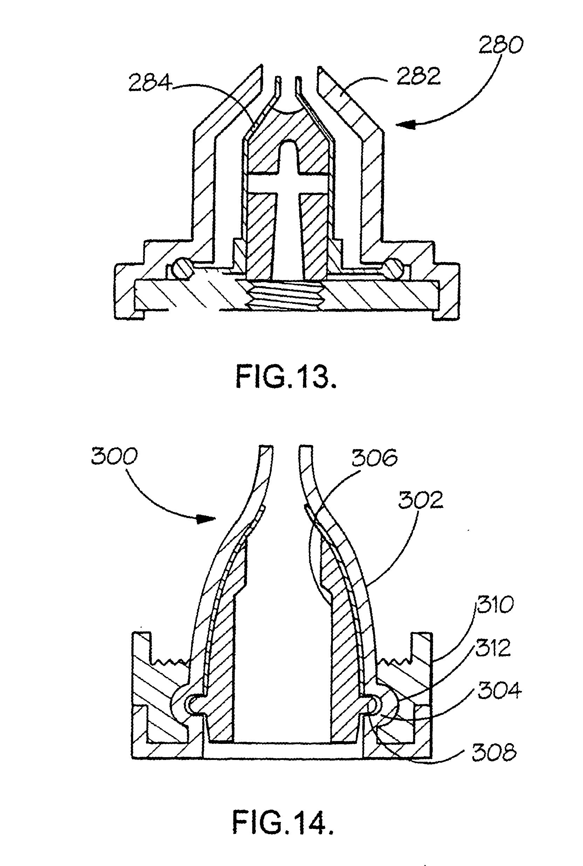

**FIG. 13** shows another embodiment of a dispensing cartridge **280** generally comprising a housing **282** and an elastomeric sheath **284.** In this embodiment the dispensing cartridge **280** is generally the same as the dispensing cartridge **220** shown in **FIG. 12A** except that dispensing cartridge **280** is substantially cone-shaped. **FIG. 13** further shows a perspective view of the elastomeric sheath **284** of the dispensing cartridge **280.** The cone-shape of the dispensing cartridge **280** may enhance the dispensing cartridge by providing a smoother contour of the surface of the cartridge with no sharp disjunctions and permitting a uniform strain on the elastomer sheath throughout the fluid expulsion cycle.

**FIG. 14** shows yet another embodiment of a dispensing cartridge **300** having an elastomeric sheath **302** enveloping a delivery block **306.** The elastomeric sheath **302** is secured by tongue **304** press-fitted between a protrusion **308** defined by the delivery block **306** and a groove **312** defined by the housing **310.** Thus, the cooperation of tongue **304,** protrusion **308** and groove **312** secure the elastomeric sheath **302** in place as well as provide fluid-tight sealing.

### Manufacture and Assembly of Dispensing Cartridges

While each part or component of any of the dispensing cartridges described above or any variations thereof may be manufactured by conventional machining techniques. injection molding is a preferred method. When manufactured by injection molding, the mold or cavity should comprise asymmetrical component parts which form a parting line away from any smooth or sealing surfaces.

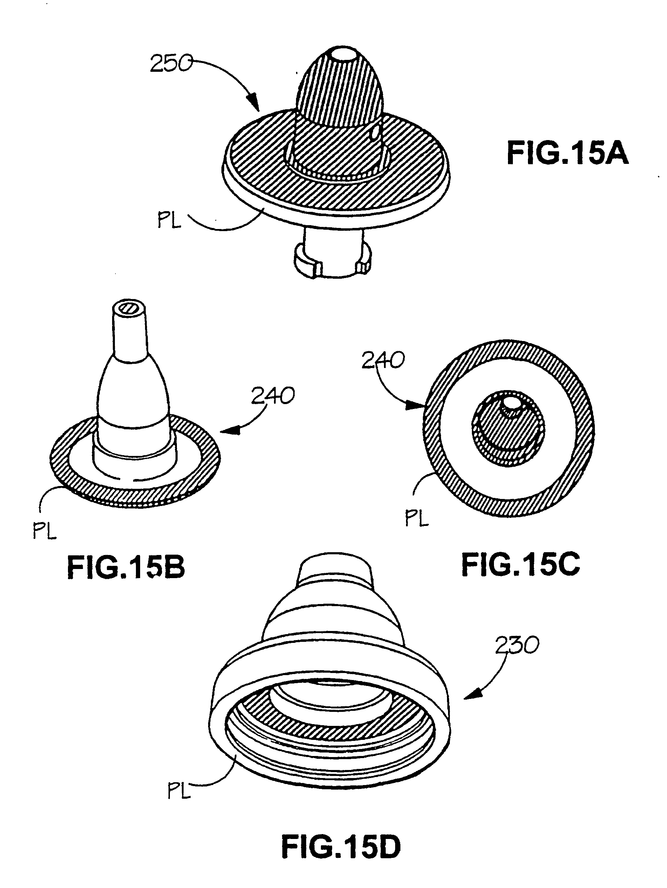

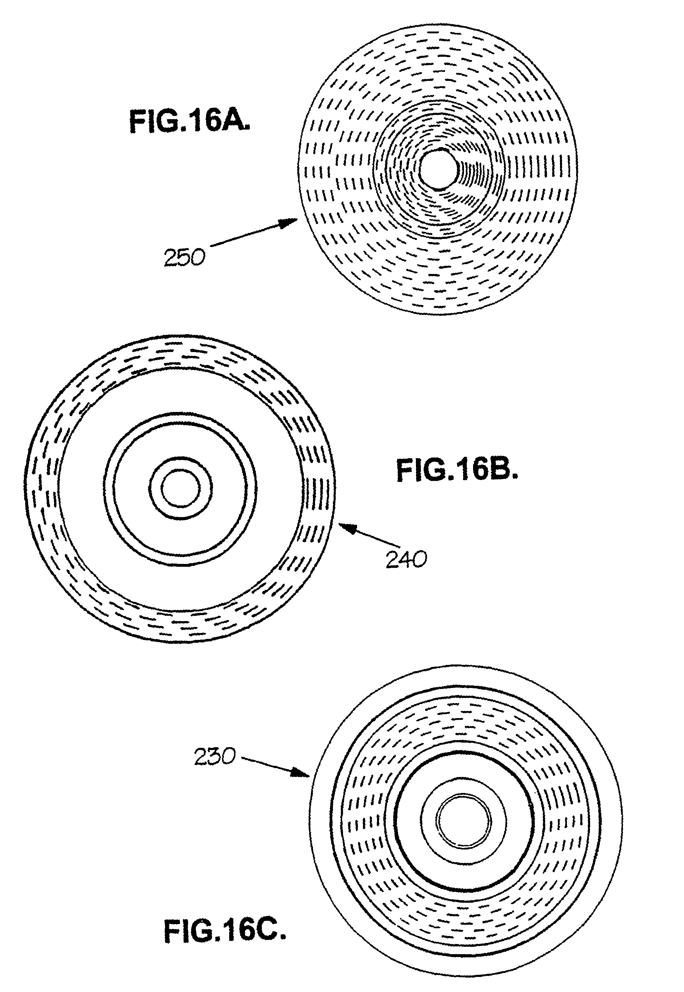

**FIGS. 15A-15D** and **FIGS. 16A-16C** illustrate certain features specific to the manufacturing of the dispensing cartridge. For illustrative purposes only, the dispensing cartridge shown in **FIGS. 15A-15D** and **FIGS. 16A-16C** correspond to the embodiment of **FIGS. 12A** and **12B.** However, it is to be understood that one of ordinary skill in the art can easily apply the general manufacturing and processing concepts and principles described herein to any of the other embodiments and/or to any other variations thereof.

**FIGS. 15A-15D** show by cross-hatching the functional surfaces of the delivery block **250**, the elastomeric sheath **240,** and the housing **230,** respectively. These functional surfaces should be free of ejector pin marks, witness lines, and tool marks. The fluid-tight seal between the elastomeric sheath **240** and the delivery block **250** may be enhanced by polishing the mold for at least a portion of these functional surfaces. For example, the functional surfaces include the contacting surfaces between the elastomeric sheath **240** and the delivery block **250.** Polishing the functional and/or contacting surfaces makes them smooth and enhances sealing. At a minimum, an interior surface of the elastomeric sheath **240** and an exterior sealing surface of the delivery block **250** should be polished.

Smoothness is important particularly near the sealing regions because any surface imperfections can act as sites for microbial adhesion or provide pathways for microbial migration. Eliminating surface imperfections prevents microbes from migrating along the interface between the elastomeric sheath **240** and the delivery block **250** and possibly to the source fluid supply. Thus, reduction in surface imperfections particularly near the sealing regions enhances sealing.

Desirable smoothness can be attained by conventional finishing techniques including but not limited to lapping, polishing, grinding or honing. Each of these processes can attain roughness heights in the range of 1-30 microinches.

To further ensure that the functional surfaces are free of ejector pin marks, witness lines and tool marks, any mold parting lines, flow lines, and ejector pin marks should be placed away from these functional surfaces. In particular, the mold parting lines indicated as **PL** for each of the delivery block **250,** the elastomeric sheath **240,** and the housing **230** are shown in **FIGS. 15A-15D,** respectively. The parting lines **PL** are disposed such that the mold components for each component of the dispensing cartridge are asymmetrical. Further, **FIGS. 16A, 16B** and **16C** illustrate the preferred circular lav direction for the delivery block **250,** the elastomeric sheath **240,** and the housing **230,** respectively.

Each component of the dispensing cartridge can have extensive coring to ensure even shrinkage and minimal distortion during the injection molding cycle. Preferred and more preferred process parameters are shown in **TABLE 1** and **TABLE 2,** respectively.

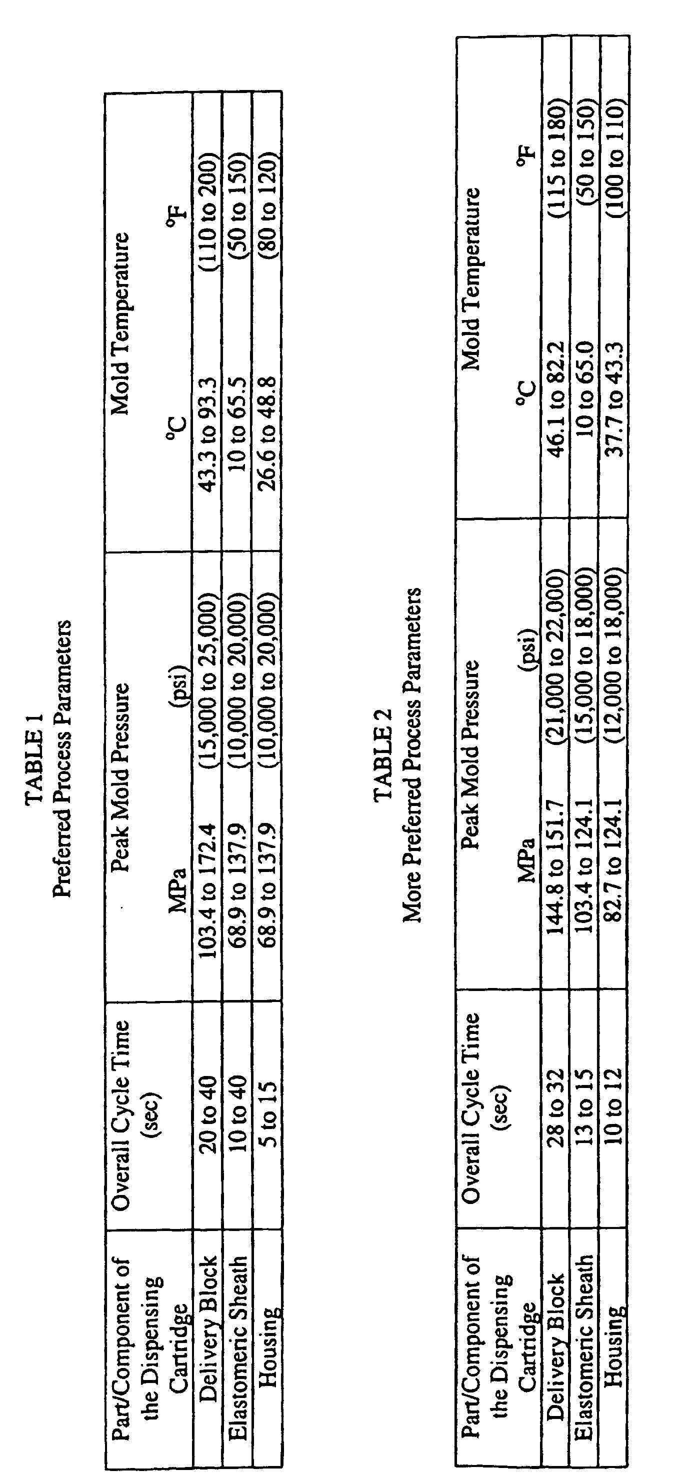

The mold for delivery block **250** is preferably gated at the concave tip to provide more symmetrical mold filling. Suitable materials include thermoplastic or thermosetting materials or moldable polymeric resins such as PMMA, ABS, PC, and GPPS. The elastomeric sheath is preferably made from a thermalplastic or thermalsetting elastomer having a Durometer Hardness in the range of 20 to 80 Shore A, more preferably approximately 48 Shore A.

Processes for fabricating the dispensing cartridge can also comprise etching. The components may be formed directly using reactive ion or dry etching of silicon compounds. For example, the delivery block can be made on a silicon wafer wherein micro-channels and ports are created by plasma etching. A thin film of silicon nitride may be selectively deposited on the wafer, forming resilient membranes or flexible members. The membrane-forming film can further be deposited on sacrificial layers (such as aluminum or silicon dioxide) to form elaborate bridges and valve structures. Therefore, it is another aspect of the present invention to size the dispensing cartridge so that extremely small amounts of flowable material (less than a microliter) can be delivered without backflow or external contamination.

Alternatively, chemical etching may be employed to create better molds. A wet chemical etching process can achieve more accurate dimensions than some conventional mold-making techniques. Therefore, many of the benefits of conventional injection molding can still be realized using chemical etching.

### Modified Atmospheric Packaging (MAP)

With reference to **FIGS**. **17A**-**17C**, the use of two dispensing cartridges in an embodiment of a system according to the present invention for modified atmospheric packaging (MAP), the packaging of goods in a controlled atmosphere, will now be described. By utilizing MAP, the life of packaged goods can be lengthened by eliminating damage-causing elements often found in ordinary packaging. Even small amounts of moisture, such as an amount of water in air, can cause premature spoiling or rusting of live produce. Other examples of goods that may benefit from MAP include lowers and meats.

**FIG. 17A** generally shows an embodiment of a MAP system. The MAP system generally comprises a controlled atmosphere source **570,** a hermetically sealed package **500** enclosing sealed good **510,** a vacuum unit **560.** The MAP system further comprises a unidirectional entry valve **520** and a unidirectional exit valve **530.** The entry valve **520** and exit valve **530** may be similar to the dispensing cartridges described above and may be integral with package **500.** The controlled atmosphere source **570** communicates with the entry valve **520** via a first stopcock **550**. Further, the vacuum unit **560** communicates with the exit valve **530** via a second stopcock **540**.

As shown in **FIG**. **17A**, the original atmosphere in the package **500** is evacuated by closing the first stopcock **550,** opening the second stopcock **540**, and applying a vacuum with the vacuum unit **560** via exit valve **530**. Because the exit valve **530** is intermediate the package **500** and the vacuum unit **560**, the original atmosphere in the package **500** is removed from the package **500** without any backflow through the exit valve **530.** In addition, the closed first stopcock **550** prevents any external contaminates from entering package **500** through entry valve **520.** Once the atmosphere is sufficiently evacuated from the package **500,** the second stopcock **540** is closed.

**FIG. 17B** illustrates the filling of the package **500** with suitable gases from the controlled atmosphere source **570** by having the first stopcock **550** open and second stopcock **540** closed. The gases from the controlled atmosphere source **570** are supplied to the package **500** via the open first stopcock **550** and unidirectional entry valve **520** until package **500** is filled to a desired level. Thus, the atmosphere of package **500** is controlled and the life of goods **510** contained package **500** can be enhanced. **FIG. 17C** shows the MAP system wherein the first stopcock **550** and the second stopcock **540** are closed and the controlled atmosphere contained in package **500** is retained by entry valve **520** and exit valve **530** for transport and storage of the goods **510** in package **500.**

It will be appreciated that the foregoing aspects of the invention provide a system for dispensing and delivering a wide range of flowable media including liquids, solutions, mixtures, suspensions, dispersions, lotions, creams, gels and salves. These flowable media can be either volatile or nonvolatile, aqueous or nonaqueous, inorganic or organic and/or any combinations thereof. With appropriate selection of materials for the component parts to be used in each specific application, the present invention has application as a dispensing and delivery system for fluids used in any industry.

The dispensing and delivery system advantageously protects the flowable materials from the adverse effects of evaporation, oxidation, and hydrolysis and advantageously prohibits the entry into the flowable media within the dispensing and delivery system of (1) microorganisms such as protozoa, yeast, molds, bacteria, and viruses; (2) air and one or more of its constituent parts such as nitrogen, oxygen, carbon dioxide, and water; (3) dust, smokes, pollens and filamentous or other particulates; (4) air-borne or blood-borne pathogens such as, for example, HIV or Hepatitis-B viruses; and/or (5) the evaporation of the flowable material or of one or more of its constituents. Therefore, filters, antimicrobial preservatives, antioxidants and hygroscopic agents are not needed. thereby providing substantial benefits in increased purity of the material. increased ease of formulation, reduction in cost, and a reduction in damaging or harmful side reactions. The effectiveness of the system becomes most apparent from the instant that the system is opened and its first contents are dispensed throughout the period of its use in the marketplace. By continuously maintaining the purity of the flowable material during delivery, the system embodied by this invention enables the distribution of larger-sized containers, thereby permitting a reduction in cost per unit volume of the material and an economy of scale.

Examples showing the effectiveness of the present invention against viral and bacterial challenges are illustrated in the following two examples.

### Example 1

The following example describes details for bacterial challenge testing of the delivery system of one embodiment of the present invention, specifically, Waterfall Company's MICROBARRIER™ Cartridge Model #WFIPIb SMC 97-62A.

The cartridge system design is intended to allow delivery of multiple doses of flowable materials and to prevent the influx of external contaminants during and between deliveries over prolonged periods of time.

The microbiological evaluation was conducted by attaching the test cartridge to a 60 mL syringe filled with sterile growth media. To simulate use, a 1-3 mL aliquot of the sterile growth media was dispensed each day through the test cartridge. The tip of the cartridge was then contaminated by dipping it into a concentrated suspension of bacteria. The bacteria used in this study was Brevundimonas diminuta (formerly Pseudomonas diminuta) at a concentration of approximately 1 x 10⁸ colony forming units per mL (CFU/mL).

Each day, an aliquot of the fluid in the syringe was collected and assayed for the presence of the test organism. The study was designed to be conducted for at least 7 days, but was extended to a total of 21 days. The results were scored as "positive" or "negative", depending on whether the challenge organism was detected in the assay fluid or whether the media in the syringe became turbid. The study evaluated 30 cartridges.

### Procedure

The test cartridges were sterilized by ethylene oxide gas prior to testing. Sterilization was performed according to the following parameters:
Ethylene Oxide Sterilization
   Preconditioning: 30 minutes minimum.
   Temperature: 52°C ± 2°C.
   Relative Humidity: 55 ± 10%
   Gas Concentration: 600 mg/liter,
   Exposure Time: 4-5 hours.
   Degassing Time: 48 hours minimum @ 55°C ± 2°C.

Approximately 100 mL of soybean casein digest broth (SCDB) was inoculated with B. diminuta and incubated with mild shaking at 37 ± 2°C for 24 ± 4 hours. The bacterial culture was diluted with nutrient broth containing 0.01 % TWEEN® 80 to achieve a concentration of approximately 1 x 10⁸ CFU/mL. The 1 x 10⁸ surface tension of the nutrient broth with 0.01% Tween® 80 was 42 ± 2 dynes/cm. A new bacterial culture was made and titrated for each day of testing. This new culture was used to contaminate the tips of the cartridges.

A sterile 60 mL syringe was aseptically filled with approximately 60 mL of nutrient broth with 0.01 % Tween® 80 (NBT). Inside a HEPA filtered hood, 1 mL of the assay fluid was dispensed from the syringe into a sterile test tube. This initial sample was the time = 0 sample for that cartridge. After dispensing the 1 mL aliquot the syringe was aseptically attached to the sterile test cartridge. A 1-3 mL aliquot of the sterile nutrient broth was then dispensed from the syringe through the test cartridge. The procedure stated that 1 mL should be dispensed, however, it was difficult to control the amount of fluid dispensed to 1 mL. This represented a deviation to the test protocol. After dispensing, the tip of the cartridge was contaminated by immersing it about one-half inch into the culture suspension. Thirty units were tested.

The entire unit (syringe and cartridge) was placed on a horizontal surface and allowed to incubate at room temperature (23 = 3°C) for 24 = 2 hours. Each day the sample collection, dispensing and contamination steps were repeated for each test unit. The testing was conducted for approximately 21 days unless the fluid in the syringe became turbid, at which point further testing for the sample was terminated.

Three negative and three positive controls were included in testing program. The negative controls comprised of sterile test units (60 mL syringes and cartridges) which were prepared the same as the test units, however, the cartridges did not have exit ports. The positive controls comprised of sterile test units (60 mL syringes and cartridges) which were prepared the same as the test units, however, the cartridges had a slit in the elastomeric sheath, freely exposing entry and exit ports to challenging bacteria.

The aliquot collected from the syringe was assayed qualitatively for growth by incubating the collected fluid for approximately 48 hours with shaking at 37 ± 2°C. A visual observation was conducted on the fluid after incubation. The occurrence of turbidity was scored as ''positive" or "+". If no turbidity was observed the result was scored "negative" or "0". Assay tubes which exhibited growth were streaked for isolation onto soybean casein digest agar (SCDA) to verify detection of the challenge organism. The SCDA plates were incubated for 24-72 hours at 37 + 2°C. Biochemical verification of B. Diminuta included a positive oxidase test and a negative Gram stain.

### Results

No contamination was observed in any of the thirty test units during the first week of testing. The positive controls were positive and the negative controls were negative.

No contamination was observed in any of the thirty test units during the second week of testing.

One sample (#18) was positive on day 16, so testing of this cartridge was discontinued. The growth in the tube responsible for the turbidity was tested and biochemically verified to be B. diminuta. No contamination was observed in any of the other twenty-nine test units during the third week of testing. The positive and negative controls remained the same for the third week.

The MICROBARRIER™ Cartridge for Multidose Dispensing and Delivery Systems for Flowable Materials is designed to prevent the influx of external contaminants during and between deliveries.

The potential for bacterial contamination is a concern for dispensing devices, especially for multi-use products which are used over prolonged periods of time.

The selection of Brevundimonas diminuta as the challenge organism was based on its small size when grown under controlled conditions. When properly cultured, many Brevundimonas organisms will pass through 0.45 µm membrane filters. The small size of the organism represents a severe bacterial challenge to the test cartridges. The rapid motility of this flagellated challenge organism, as well as its possession of a sensory apparatus that drives the organism to nutrients enhances the severity of the test challenge. B. diminuta is also the organism of choice for conducting membrane filter validation testing for pharmaceutical processes.

The surface tension range for blood and body fluids is approximately 42-60 dynes/cm. Therefore, in order to simulate the wetting characteristics of blood and body fluids the surface tension of the challenge suspension was adjusted to approximate the lower end of this surface tension range [42 ± 2 dynes/cm].

The selection of daily dispensing of the nutritive media represents a severe challenge. The daily contamination with a new culture and the 24 hours to permit growth through the mechanism is more severe than a test which involves only frequent dispensing steps.

### Summary

The MICROBARRIER™ Cartridges, as described in the present invention, were challenged daily for 21 days with Brevundimonas diminuta, a small. motile bacterium. The challenge test procedure comprised of (1) dispensing of nutritive media through the cartridge, (2) contamination of the cartridge tips by immersing them into a concentrated bacterial suspension (10⁸ CFU/mL), and (3) placing each cartridge and syringe on a horizontal surface for 24 hours incubation at 23 ± 2°C. The cartridges provided complete sterility for 14 days. Over a three week period, only one of 30 units allowed organisms to grow back. This corresponds to an 100% effective barrier for weeks one and two, and a 97% barrier effectiveness for week three.

The unique design of the device makes comparison to other conventional microbial barriers difficult. However, the device performed comparable or superior to that seen in the laboratory for 0.45 gm microporous membranes.

### Example 2

The following example describes details for viral challenge testing of the delivery system of one embodiment of the present invention, specifically, Waterfall Company's MICROBARRIER™ Cartridge Model #WFIPlb SMC 97-62A.

The cartridge system design is intended to allow delivery of multiple doses of flowable materials and prevent the influx of external contaminants during and between deliveries over prolonged periods of time.

The microbiological evaluation was conducted by attaching the test cartridge to a 60 mL syringe filled with sterile growth media. To simulate use, a 1-3 mL aliquot of the sterile growth media was dispensed each day through the test cartridge. The tip of the cartridge was then contaminated by dipping it into a concentrated suspension of virus. The virus suspension comprised of the bacteriophage ΦX174 and was prepared at a concentration of approximately 1 x 10⁸ plaque forming units per mL (PFU/mL).

Each day, an aliquot of the fluid in the syringe was collected and assayed for the presence of the test organism. The study was designed to be conducted for at least 7 days, but was extended to a total of 21 days. The results were scored as "positive" or "negative", depending on whether the challenge organism was detected in the assay fluid. The study evaluated 30 cartridges.

### Procedure

The test cartridges were sterilized by ethylene oxide gas prior to testing. Sterilization was performed according to the following parameters:
Ethylene Oxide Sterilization
   Preconditioning: 30 minutes minimum.
   Temperature: 52°C ± 2°C.
   Relative Humidity: 55 ± 10%
   Gas Concentration: 600 mg/liter.
   Exposure Time: 4-5 hours.
   Degassing Time: 48 hours minimum @ 55°C ± 2°C.

The ΦX174 bacteriophage was prepared by inoculating approximately 100 mL of nutrient broth with E. coli and incubating approximately 6-18 hours at 37 ± 2°C with rapid shaking at approximately 200-250 RPM. A 1/100 dilution of the culture was prepared and incubated at 37 ± 2°C. The culture was allowed to grow to a density of =2-4 x 10⁸ CFU/mL for about 4 hours. This cell density corresponds to an optical density of 0.3-0.6 at 640 nm. The bacterial culture was inoculated with 5-10 mL of the ΦX174 bacteriophage stock (ATCC #13706-BI). The ratio of bacteriophage to bacterial cells was 0.1 to 2.0. The suspension was incubated with rapid shaking for approximately 1 to 5 hours at 37 ± 2°C. Complete lysis of the host bacteria occurred when the broth cleared. The viral suspension was centrifuged at 10000 x G for 40 minutes. The supernatant was filtered through a sterile 0.22 µm filter to remove the host cell debris. The bacteriophage challenge suspension was then prepared by diluting the phage stock in sterile nutrient broth with 0.01% Tween® 80 to provide a challenge concentration of approximately 1 x 10⁸ PFU/mL. The surface tension of the nutrient broth with 0.01% Tween® 80 was 42 ± 2 dynes/cm. The titer of the culture was determined for each day of testing.

A sterile 60 mL syringe was aseptically filled with -60 mL of nutrient broth with 0.01% Tween® 80 (NBT). Inside a HEPA filtered hood, 1 mL of the assay fluid was dispensed from the syringe into a sterile test tube. This initial sample was the time = 0 sample for that cartridge. After dispensing the 1 mL aliquot the syringe was aseptically attached to the sterile test cartridge. A 1-3 mL aliquot of the sterile nutrient broth was then dispensed from the syringe through the test cartridge. The original procedure stated that 1 mL should be dispensed. After dispensing, the tip of the cartridge was contaminated by immersing it about one-half inch into the culture suspension. Thirty units were tested.

The entire unit (syringe and cartridge) was placed on a horizontal surface and allowed to incubate at room temperature (23 ± 3°C) for 24 ± 2 hours. Each day the sample collection, dispensing and contamination steps were repeated for each test unit. The testing was conducted for-21 days unless the plaque assay indicated consistent viral contamination, at which point further testing for the positive sample was terminated.

Three negative and three positive controls were included in testing program. The negative controls comprised of sterile test units (60 mL syringe and cartridge) which were prepared the same as the test units, however, the cartridge units did not have exit ports. The positive controls comprised of sterile test units (60 mL syringe and cartridge) which were prepared the same as the test units, however, the cartridge units had a slit in the elastomeric sheath, freely exposing entry and exit ports to challenging viruses.

The aliquot collected from the syringe during the sample collection step was assayed for the presence of ΦX174 by placing the 1 mL aliquot into 3 mL of molten (45 ± 2°C) top agar (TOPA). Approximately 2 drops of E. coli were added to the molten top agar which was then poured over the surface of a bottom agar plate and allowed to solidify. The plates were incubated at 37 ± 2°C for 18-24 hours. Results were scored as "positive" or "negative'', depending on whether the challenge organism was detected in the assay fluid. "Positive" indicates the presence of clear plaques and "negative" indicates that plaques due to ΦX174 were not seen.

### Results

Assay results from the first week demonstrated negative results for the negative controls and positive results for the positive controls. In five of the test cartridges, six positive results were observed. These apparent breakthroughs contained only four plaque forming units or less per sample. No breakthroughs occurred on consecutive days for the same sample cartridge.

Data from week two showed similar results for the test cartridges. Three cartridges and four assays demonstrated plaques. All test samples produced values of three PFU or less, probably representing "baseline" fluctuations. When assayed on day one, all three positive controls demonstrated plaques. The numbers of plaques were too large to count and tests on positive controls were discontinued. One of the negative controls demonstrated plaques in assays of samples taken on three successive days, though the values of these were low and fluctuated between one and five plaques.

Data from week three only demonstrated one sample with a positive plaque assay and that contained only a single plaque. On days 17 and 18 samples were not assayed. Therefore, fewer actual analyses were performed in week three. However, the number of test cartridges with apparent breakthrough by virus was lower than in week two. All three of the negative controls demonstrated virus breakthrough. One of these, negative control #3, had apparent break-through as shown by higher levels of virus than were found in the test cartridges as well as the presence of viruses in successive days of sampling.

Summarizing the results of the three weeks, plaques were observed in assays of eight of the cartridges on eleven separate occasions. Six of the cartridges showed a single positive assay; one cartridge had two positives and one cartridge had three positives. Six of the eleven positive assaying cartridges had only one plaque, one of the eleven positives had two plaques, three of the eleven positives had three plaques, and one had four plaques.

It should be noted that the challenge organism, ΦX174, will not grow in the test systems and is nonmotile. Consequently, it can gain entry to the test aliquots in only two ways: through airborne contact during assay, i.e., via fluid aspiration whereby virai organisms are dispensed in the air and contact the assay plate and/or transferred across the cartridge by diffusion. However, the relatively low numbers of plaques observed in this study is probably due to cross-contamination with heavily contaminated syringes and devices.

**Table 3** summarizes the apparent viral breakthrough of eight test cartridges challenged by ΦX174 bacteriophage. In all cases the number of plaques observed are four or less. Since the observed assay levels are low and do not reoccur on successive days, it is thought that the low number of plaques assayed in the test samples are from environmental contamination. The test virus is very stable and survives drying well. The test samples were maintained in an open laboratory and handled daily. The observed level of contamination decreased as greater effort was expended to eliminate cross-contamination. During week three, only a single test cartridge exhibited viral breakthrough and the assay showed only a single plaque. In addition, no test samples demonstrated breakthroughs on consecutive days as would be expected if the virus had actually passed through the cartridge.

**TABLE 3**

| **APPARENT VIRAL BREAKTHROUGHS** | | | | | | | | | | |
|---|---|---|---|---|---|---|---|---|---|---|
| Cartridge Number | Test Day/Number of Plaques Observed ⁽¹⁾ | | | | | | | | | Number of Days (+) Assays |
| | 1 | 3 | 5 | 6 | 7 | 12 | 13 | 14 | 15 | |
| 10 | | | | | | | 1 | | | 1 |
| 11 | | | | | | 1 | | 3 | | 2 |
| 12 | | | | | 2 | | | | | 1 |
| 14 | 3 | | | 1 | | | 1 | | | 3 |
| 18 | | | | 3 | | | | | | 1 |
| 20 | | | | | | | | | 1 | 1 |
| 21 | | 4 | | | | | | | | 1 |
| 30 | | | 1 | | | | | | | 1 |
| Total Cartridges | 8 | Total Days with (ö) Assays | | | | | | | | 11 |

| | | | | | | | | | | |
|---|---|---|---|---|---|---|---|---|---|---|
| (1) Testing was conducted for 21 days. No plaques were observed on test days not listed nor days left blank. | | | | | | | | | | |

**Table 4** summarizes the apparent viral breakthrough of all three negative control cartridges. The exit ports of these cartridges were blocked with silicone sealant. Negative control#1 showed no breakthrough from the initiation of the challenge through day 10 as well as on days 14, 16, and 19 through 21. Negative control #2 shows no breakthrough until days 20 and 21. On these days low assay values were observed similar to those found in the test cartridges. The last negative control, #3, assayed positively on days 19, 20, and 21. Although the number of plaques observed are considerably higher than were found in the other cartridges, they are several orders of magnitude lower than the assays of the three positive controls where breakthrough occurred on day 1. Furthermore, the assay values decreased successively over the three days. The level of detectable virus fell twenty two-fold over the three days. If virus was diffusing across the cartridge into the syringe reservoir, the number of plaques in the assay should remain constant or increase with time.

**TABLE 3**

| **APPARENT VIRAL BREAKTHROUGHS** | | | | | | | |
|---|---|---|---|---|---|---|---|
| Cartridge Number | Test Day/Number of Plaques Observed⁽²⁾ | | | | | | |
| | 11 | 12 | 13 | 15 | 19 | 20 | 21 |
| Neg. #1 | 1 | 5 | 1 | 10 | | | |
| Neg. #2 | | | | | | 4 | 1 |
| Neg. #3 | | | | | 200 | 49 | 9 |

| | | | | | | | |
|---|---|---|---|---|---|---|---|
| (2) Testing was conducted for 21 days. No plaques were observed on test days not listed nor days left blank. | | | | | | | |

### Discussion

The MICROBARRIER™ Cartridge for Multidose Dispensing and Delivery Systems for Flowable Materials is designed to prevent the influx of external contaminants during and between deliveries.

The potential for viral contamination is a concern for dispensing devices. especially for multi-use products which are used over prolonged periods of time.

The choice of a viral model to evaluate the effectiveness of the bloodborne pathogen barrier properties of cartridges is important. There are problems associated with utilizing the actual bloodborne pathogens as test organisms. HEV and HCV cannot be grown in the laboratory. HIV represents a significant safety and liability consideration due to its high infectivity potential and requirements for extreme and expensive precautions.

Therefore, a model for the bloodbome pathogens was researched. The ideal properties of a surrogate included small size. spherical or polyhedral [round] morphology, environmental stability, low or non-human infectivity, high assay sensitivity, rapid growth, and high titer. The ΦX174 bacteriophage was selected as the most appropriate surrogate for the bloodbome pathogens mentioned because it satisfies all of these criteria. The ΦX174 bacteriophage has no envelope and is 25-27 nm in size, similar to HCV, the smallest pathogen, has an icosahedral or nearly spherical morphology similar to all three viral pathogens mentioned, has excellent environmental stability, is non-infectious to humans, has a limit of detection which approaches a single virus particle, grows very rapidly where assay results can be read within as little as 12 hours, and can be cultivated to reach very high titers similar to HBV, the most concentrated pathogen mentioned.

Animal virus surrogates are not used as they require specialized cell culture and enzyme assay techniques. In addition, the stability of most of the animal viruses is less than desirable and plating efficiency is low or unknown.

Despite the variety of viral coats or surfaces, i.e., lipophilic, hydrophilic, etc., they generally perform similarly in barrier or penetration tests. This is because viruses adopt the charge of the liquid in which they are suspended and are normally more affected by the liquid vehicle than by their own physical or chemical properties.

The surface tension range for blood and body fluids is approximately 42-60 dynes/cm. Therefore, in order to simulate the wetting characteristics of blood and body fluids the surface tension of the bacterial and viral challenge suspensions was adjusted to approximate the lower end of this surface tension range [42 ± 2 dynes/cm].

### Summary

Over the three week test period, 30 Waterfall MICROBARRIER™ test cartridges fitted to syringes were challenged daily with ΦX174 (=10⁸ PFU/mL). The reservoir solutions in the syringe were tested for ΦX174 daily using a plaque assay procedure using E. coli. Eight of the 30 cartridges had one to four plaques on one or more days. This corresponds to an apparent barrier performance of 73%. However, none of the test samples assayed positive on successive days and none of the samples demonstrated more than four plaques in any assay. By comparison, the number of plaques in each of the three positive controls were too numerous to count (>300 PFU). It is thought that these eight positive test results are due to environmental contaminants representing a baseline error. As positives were noted and data analyzed, significant additional environmental controls were implemented. The number of plaque positive cartridges went from five in week one, two in week two, and one cartridge in week three. The week three test cartridge had only a single plaque. It is difficult to allow the passage of only a single virus particle through a cartridge. Conversely, it is relatively easy to aerosolize ΦX174 and have quite small numbers of viral particles contaminate the sampling process and generate small numbers of plaques.

Moreover, the presence of virus in the reservoir solutions of the negative control cartridges, having silicone-plugged entry and exit ports, indicate the viral particles were airborne and did not breakthrough the cartridges. Therefore, it is thought that the test sample positives on assays resulted from environmental contamination and that Waterfall's MICROBARRIER™ cartridges were 100% effective barriers in preventing the entry of viral particles throughout the three week test period.

By comparison, such barriers as surgical gloves and condoms may vary from lot to lot and range from less than 50% up to 100% barrier performance, when tested with the same virus over only 60 minutes.

### Applications

various flowable materials can benefit from the contamination-free delivery system of the present invention including (1) blood and blood products; (2) tissue and organ perfusion; (3) human and veterinary pharmaceutical preparations, both ethical and over-the-counter products, including eye and lens care solutions; (4) in vitro and in vivo diagnostic agents, (5) biologicals, (6) personal care preparations including cosmetics and fragrances; toiletries products for the care and treatment of skin, hair and nails; shampoos; hair colorants; health and beauty care products; (7) hot or cold foods, beverages, nutritional supplements and vitamins; and (8) commercial, institutional, laboratory and industrial chemicals, including but not limited to chemical reagents, detergents, photographic solutions, adhesives, paints, varnishes, lubricants and fuels.

### Medicinal

Devices for transporting medicinal fluids stand to benefit from the present invention. Catheters and syringes are examples of such devices. These devices are commonly used to transport aqueous solutions, blood, plasma, vaccines and other medicinal fluids into the human body. A well known danger associated with delivery of medicinal fluids is that the source can become contaminated and is subsequently delivered to the patient. Contaminating the source supply causes economic waste but more importantly, the contaminated fluid can be delivered to the patient. In the case of transporting blood, the harm is particularly acute because blood can be infected by life-threatening pathogens such as the HIV or Hepatitis-B viruses. By using the delivery cartridge of the present invention, however, the risk of contaminating the source can be dramatically reduced. In addition, the present invention provides an economic benefit because the source supply can be reused once opened, decreasing the amount of waste.

The dispensing of higher viscosity medicinal materials also stands to benefit from the present invention. For example, transdermal analgesics used in the treatment of rheumatism can be delivered in the form of thick lotions or ointments. Once these materials are dispensed, they can become contaminated by external microbes and particles. Thus, there exists a need for an effective sealing mechanism for the dispensing of high viscosity medicinal materials. The dispensing system of the present invention meets this need and even further, medicinal materials may be reformulated preservative-free since air and other airborne microbes are prevented from penetrating the fluid-tight seal.

### Eye & Lens Care Solutions

The use of said dispensing and delivery system enables said flowable media to be reformulated free of preservatives or other protective additives facilitating the therapeutic effect of a human or veterinary pharmaceutical product. For example, it is well known that preservatives can have harmful side effects. Preservatives presently in use in eye and lens care solutions cause toxicity reactions and/or allergic reactions in eye tissues. Preservatives in prescription eye care products are known to adversely affect the post-surgery healing rate of eye tissues. The foregoing aspects of the present invention provide the advantages of a multi-dose system wherein a pharmaceutical agent can be delivered to an end-user without the need for chemical preservatives or other agents required to protect a substance from degradation due to the entry of air and air-borne contaminants.

### Industrial Commercial, Institutional & Laboratory Chemicals

The foregoing advantages of the inventions are not limited to pharmaceuticals, but rather provide other benefits in the dispensing of industrial chemical fluids, photographic solutions, soaps and detergents, paints, varnishes, adhesives and the like substances as well. The present system advantageously maintains fluids free from contamination by air, airborne particulates such as dust, fibers, etc. and airborne microbes. Protective filters, antimicrobial preservatives, antioxidants and hygroscopic agents are not needed. Therefore, if handled property, said dispensing and delivery system provides substantial benefits to a fluid by enabling increased purity, increased ease and efficiency of formulation and production, reduction in cost, and a reduction in harmful side reactions.

### Photographic Solutions

The reformulation of photographic development agents without antioxidants, for example would provide substantial benefits in efficiency and in more cost effective formulations. The present system advantageously maintains photographic solutions free from contamination by airborne particulates such as dust, fibers, etc. as well making unnecessary the need for mechanical filters or to add antimicrobial preservatives, antioxidants and hygroscopic agents.

### Commercial and Institutional Soaps and Detergents

Cleaners used in institutional and restaurant settings are known to be susceptible to the growth of yeasts and molds, even when preservatives are used. Naturally occurring mutations make some specimens resistant to the action of the preservative resulting in preservative-resistant strains. The foregoing advantages of the present system make the use of preservatives unnecessary providing the needed sanitation and freedom from contamination by microorganisms.

### Foods & Beverages

Tomato catsup is an acidic medium and a poor nutrient for the growth of microbes. Therefore it is unnecessary to add preservatives. However, on contact with air tomato catsup oxidizes and turns black. The catsup also evaporates forming unsanitary encrustation around the lip of the container. Edible oils and wines are additional examples of the damaging effects of oxidation on foods and beverages. Oxygen in air causes the oils to turn rancid. The foregoing advantages of the system described herein provide the needed protection from evaporation and oxidation required by these foods and beverages.

While the invention has been described in connection with what is presently considered to be the most practical and preferred embodiments, it is to be understood that the invention is not limited to the disclosed embodiments, but on the contrary, is intended to cover various modifications and equivalent arrangements included within the appended claims. Further, each of the references cited herein are hereby incorporated by reference in their entireties.

For example, there are many other equivalent methods of mounting the dispensing cartridge of the invention on collapsible containers. Adhesives, glues, epoxide-based pastes, ultrasonic weids, other mechanical means and any number of other well-known implements are all available for that purpose. The methods for attaching the elastomeric sheath and distribution of outlet ports on the delivery block also can be provided as desired. Accordingly, persons of ordinary skill in this field are to understand that all such equivalent structures are to be included within the scope of the following claims.

## Claims

1. A packaging system for packaging goods, comprising:
a container for holding the goods;
a unidirectional exit valve (530) in fluid communication with the container; and
a unidirectional entry valve (520) in fluid communication with the container;
a controlled atmosphere source (570) in fluid communication with the entry valve; and
a vacuum device (560) in fluid communication with the exit valve (530).

2. A system as claimed in claim 1, wherein the controlled atmosphere comprises a gas selected from the group consisting of nitrogen, oxygen, carbon dioxide, hydrogen and water vapor.

3. A system as claimed in claim 1 or claim 2, further comprising a first stopcock (550) in fluid communication with the entry valve (520) and the controlled atmosphere source (570) and a second stopcock (540) in fluid communication with the exit valve (530) and the vacuum device (560).

4. A process for modified atmosphere packaging for packaging goods in a container, comprising:
removing atmosphere in the container by supplying a vacuum to the container via a one-way exit valve (530) in fluid communication with the container; and
supplying a controlled atmosphere to the container through a one-way entry valve (520) in fluid communication with the container.

5. A process as claimed in claim 4, further comprising:
closing a first stopcock (550) in fluid communication with the entry valve (520) and opening a second stopcock (540) in fluid communication with the exit valve (530) prior to removing the atmosphere in the container; and
opening the first stopcock (550) and closing the second stopcock (540) after removing the atmosphere in the container and prior to supplying the controlled atmosphere.

## Patentansprüche

1. Verpackungssystem zum Verpacken von Waren, umfassend:
einen Behälter zum Halten der Waren;
ein in einer Richtung wirkendes Auslassventil (530) in Fluidkommunikation mit dem Behälter; und
ein in einer Richtung wirkendes Einlassventil (520) in Fluidkommunikation mit dem Behälter;
eine gesteuerte Atmosphärengasquelle (570) in Fluidkommunikation mit dem Einlassventil; und
eine Vakuumeinrichtung (560) in Fluidkommunikation mit dem Auslassventil (530).

2. System nach Anspruch 1, bei dem das gesteuerte Atmosphärengas ein Gas aufweist, das aus der aus Stickstoff, Sauerstoff, Kohlendioxid, Wasserstoff und Wasserdampf bestehenden Gruppe ausgewählt ist.

3. System nach Anspruch 1 oder Anspruch 2, das ferner einen ersten Absperrhahn (550) in Fluidkommunikation mit dem Einlassventil (520) und der gesteuerten Atmosphärengasquelle (570) und einen zweiten Absperrhahn (540) in Fluidkommunikation mit dem Auslassventil (530) und der Vakuumeinrichtung (560) aufweist.

4. Verfahren für Verpackung bei modifizierter Atmosphäre zum Verpacken von Waren in einem Behälter, umfassend:
Entfernen von Atmosphärengas in dem Behälter durch Zuführen eines Vakuums zu dem Behälter über ein Einwegeauslassventil (530) in Fluidkommunikation mit dem Behälter; und
Zuführen eines gesteuerten Atmosphärengases zum Behälter durch ein Einwegeeinlassventil (520) in Fluidkommunikation mit dem Behälter.

5. Verfahren nach Anspruch 4, ferner umfassend:
Verschließen eines ersten Absperrhahns (550) in Fluidkommunikation mit dem Einlassventil (520) und Öffnen eines zweiten Absperrhahns (540) in Fluidkommunikation mit dem Auslassventil (530) vor Entfernung des Atmosphärengases in dem Behälter; und
Öffnen des ersten Absperrhahns (550) und Schließen des zweiten Absperrhahns (540) nach Entfernen des Atmosphärengases im Behälter und vor Zuführung des gesteuerten Atmosphärengases.

## Revendications

1. Un système de conditionnement pour conditionner des marchandises, comportant :
un conteneur pour contenir les marchandises ;
une valve de sortie unidirectionnelle (530) en communication fluide avec le conteneur ; et
une valve d'entrée unidirectionnelle (520) en communication fluide avec le conteneur ;
une source d'atmosphère contrôlée (570) en communication fluide avec la valve d'entrée ; et
un appareil à vide (560) en communication fluide avec la valve de sortie (530).

2. Un système conforme à la revendication 1, dans lequel l'atmosphère contrôlée comprend un gaz choisi dans le groupe consistant en l'azote, l'oxygène, le dioxyde de carbone, l'hydrogène et la vapeur d'eau.

3. Un système conforme à la revendication 1 ou la revendication 2, comportant en outre un premier robinet d'arrêt (550) en communication fluide avec la valve d'entrée (520) et la source d'atmosphère contrôlée (570) et un deuxième robinet d'arrêt (540) en communication fluide avec la valve de sortie (530) et l'appareil à vide (560).

4. Un procédé pour conditionnement sous atmosphère modifiée pour conditionner des marchandises dans un conteneur, comportant :
retirer l'atmosphère présente dans le conteneur en apportant un vide dans le conteneur par le biais d'une valve de sortie anti-retour (530) en communication fluide avec le conteneur ; et
apporter une atmosphère contrôlée au conteneur par le biais d'une valve d'entrée anti-retour (520) en communication fluide avec le conteneur.

5. Un procédé conforme à la revendication 4, comportant en outre :
fermer un premier robinet d'arrêt (550) en communication fluide avec la valve d'entrée (520) et ouvrir un deuxième robinet d'arrêt (540) en communication fluide avec la valve de sortie (530) avant de retirer l'atmosphère présente dans le conteneur ; et
ouvrir le premier robinet d'arrêt (550) et fermer le deuxième robinet d'arrêt (540) après avoir retiré l'atmosphère présente dans le conteneur et avant d'apporter l'atmosphère contrôlée.
